# EUROPÄISCHE PATENTANMELDUNG

(11) **EP 2 772 586 A2**
(43) Veröffentlichungstag der Anmeldung: **03.09.2014**
(21) Anmeldenummer: 14000695.8
(22) Anmeldetag: 27.02.2014
(51) Int. Cl.: E02D 17/08, E02D 29/12, E21D 7/00

(54) **Vorrichtung zum Halten eines Schachtkranzes auf einem Schachtelement**

(30) Priorität: 28.02.2013 DE 102013003307
(71) Anmelder: TRACTO-TECHNIK GmbH & Co. KG, 57368 Lennestadt (DE)
(72) Erfinder: Dipl.-Ing. Sebastian Fischer, D-57368 Lennestadt (DE)
(74) Vertreter: König, Gregor Sebastian

(57) **Zusammenfassung**

Die Erfindung betrifft eine Vorrichtung zum Halten eines Schachtkranzes (1) auf einem Schachtelement (7), wobei der Schachtkranz (1) eine Auflagefläche für das Schachtelement aufweist und zum Schachtkranz hin schwenkbare Klammern (2) vorgesehen sind, die in einer Öffnungsstellung vorgespannt und mittels einer Zugeinrichtung in Schließstellung in Anlage zum Schachtelement gebracht werden können.

## Beschreibung

Die Erfindung betrifft eine Vorrichtung zum Halten eines Schachtkranzes auf einem Schachtelement.

Im Bereich der Geothermie, insbesondere im Bereich der Nutzung von Erdwärme für die Beheizung von Häusern, ist es erforderlich, Erdwärmesonden in das Erdreich einzubringen. Dies kann durch Ausheben des Erdreichs oder durch Bohrungen im Erdreich erfolgen, um dann die für den Wärmeaustausch einzusetzenden Sonden in das Erdreich einzulegen oder in die Bohrung einbringen zu können.

Zum Einbringen der Erdwärmesonden ist es bekannt, eine Antriebseinheit - meist in Form einer Erdarbeitsvorrichtung - zu verwenden, die auf einer Bohrlafette mit Drehkranz angeordnet sein kann. Die Bohrlafette mit dem Drehkranz kann auf einem Schachtelement montiert werden. Das Schachtelement kann vorkonfektioniert sein, und weist üblicherweise eine Tiefe von 1 m und einem Durchmesser von 1 m auf.

Der Schacht kann jederzeit für Service und Wartung zugänglich sein. Die Anlage wird auf dem Drehkranz mit dem Schacht verbunden und auf den gewünschten Neigungswinkel sowie die Position auf dem Drehkranz für jeden Ansatz zum Einbringen der Erdwärmesonden flexibel eingestellt. Üblicherweise wird mittels eines Bohrkopfes und eines Schutzrohres zunächst ein Sondenkanal erstellt und in einem weiteren Arbeitsgang die Erdwärmesonde eingebracht.

Üblicherweise besteht der Drehkranz im Stand der Technik aus einzelnen Segmenten und wird händisch auf das Schachtelement aufgesetzt und durch Anziehen einer Vielzahl von einzelnen Schrauben mit dem Schachtelement verbunden.

Aufgabe der Erfindung ist es, eine Vorrichtung zum Halten eines Schachtkranzes auf einem Schachtelement zu schaffen, die eine einfachere Handhabung bei trotzdem gutem Halt des Schachtkranzes auf dem Schachtelement sowie zuverlässiger Konstruktion ermöglicht.

Die erfindungsgemäße Aufgabe wird durch den Gegenstand des unabhängigen Patentanspruchs 1 gelöst.

Kerngedanke der Erfindung ist es, schwenkbar gelagerte Klammern über eine Zugeinrichtung miteinander zu verbinden, wobei durch Beaufschlagung der Zugeinrichtung die Klemmelemente in Anlage zum Schachtelement gebracht werden und der Schachtkranz an dem Schachtelement fixiert wird. Hierdurch wird eine einfache Handhabung ermöglicht, wobei zudem durch eine Vorspannung der Klammern in Öffnungsstellung erreicht werden kann, dass beim Lösen der Zugeinrichtung die Klammern in ihre ursprüngliche Lage zurückgezogen und der Schachtkranz vom Schachtelement abgenommen werden kann.

Der Schachtkranz kann auf das Schachtelement aufgelegt werden. Der Schachtkranz kann eine Auflagefläche aufweisen, die zur Auflage auf das Schachtelement dienen kann.

Der Begriff "Schachtkranz" im Sinne der Erfindung umfasst ein insbesondere ringförmig ausgebildetes Element, an dem ein Bohrgerät angekoppelt werden kann, insbesondere über die Bohrlafette des Bohrgeräts. Der Schachtkranz kann als Schachtring ausgestaltet sein. Der Schachtkranz kann ein- oder mehrteilig ausgestaltet sein. Die Umfangsform des Schachtkranzes ist vorzugsweise ringförmig, wobei Abweichungen von der Ringform mit linearen Umfangsabschnitten, insbesondere beispielsweise ein Sechs- oder Acht-Eck möglich sind.

Der Begriff "Schachtelement" im Sinne der Erfindung umfasst ein röhrenförmiges Element, das insbesondere ringförmig ausgebildet sein kann. Die Querschnittsform des Schachtelements kann auch abschnittsweise lineare Abschnitte enthalten.

Der Begriff "Klammer" im Sinne der Erfindung umfasst Klemmelemente, die für eine lösbare formschlüssige Verbindung an entsprechenden Elementen des Schachtelements in Eingriff bringbar sind. Die Elemente des Schachtelements können beispielsweise als Rippen oder Vorsprünge ausgebildet sein.

Die Klammern können an dem Schachtkranz schwenkbar befestigt sein. An dem Schachtkranz können Aufnahmen für eine Schwenkachse der Klammern ausgebildet sein. Es kann möglich sein, dass die Klammern in einer Ebene, die durch die Längsachse des Schachtelements verläuft, verschwenkt werden in Richtung des Schachtelements.

In einer bevorzugten Ausführungsform steht der Schachtkranz mit einem sich vom Schachtelement erstreckenden Abschnitt in Verbindung, an dem eine Bohrlafette befestigt werden kann. Hierdurch kann eine sichere Verbindung erreicht werden, mit der die Anlage auf den gewünschten Neigungswinkel sowie die Position auf dem Drehkranz für jeden Ansatzpunkt flexibel eingestellt werden kann.

Für eine besonders einfache Konstruktion können die Klammern an dem Schachtkranz schwenkbar derartig befestigt sein, dass die Schwenkachsen der Klammern parallel zur Umfangsrichtung bzw. tangential zum Umfang des Schachtkranzes verlaufen. Die Klammern können angepasst sein, um in Vorsprünge oder Rippen am Schachtelement einzugreifen. Vorzugsweise sind mehrere Klammern um den Umfang des Schachtkranzes verteilt angeordnet, insbesondere nahezu punktsymmetrisch um das Zentrum des Drehkranzes, um eine Gleichverteilung von auftretenden Kräften und ihre Einleitung in das Schachtelement zu ermöglichen.

Für eine einfache Montage und Konstruktion der Vorrichtung können die Klammern in die Öffnungsstellung mittels je einer Feder vorgespannt sein; insbesondere kann eine Zugfeder verwendet werden.

Die Zugeinrichtung kann ein Spannseil oder einen Spanngurt aufweisen, das bzw. der in den Klammern längs des Umfangs des Schachtelements geführt sein kann, um eine einfache Handhabung der Vorrichtung und eine einfache Konstruktion zu ermöglichen.

Unter dem Begriff "Spannseil" oder "Spanngurt" im Sinne der Erfindung wird ein längliches, biegeschlaffes Element verstanden, das zur Übertragung von Zugkräften verwendet werden kann. Vorzugsweise kann das Spannseil oder der Spanngurt ein oder mehrere, insbesondere geflochtene metallische Drähte aufweisen.

In einem Ausführungsbeispiel kann das Spannseil oder der Spanngurt in einer längs der Schwenkachse verlaufenden in Umfangsrichtung geschlossenen Bohrung in der Klammer geführt sein, so dass eine einfache Sicherung des Spannseils bzw. Spanngurts an der Klammer möglich ist. Neben der einfachen Sicherung des Spannseils bzw. des Spanngurts an der Klammer ist auch eine einfache Montage möglich, beispielsweise wenn das Spannseil oder der Spanngurt ersetzt werden muss.

Für eine einfache Handhabung kann in einer bevorzugten Ausführungsform vorgesehen sein, dass mittels einer Kurbel das Spannseil oder der Spanngurt spannbar ist in Schließstellung der Klammern zum Halten des Schachtkranzes auf dem Schachtelement.

Die Erfindung wird nachfolgend anhand von einem in den Zeichnungen dargestellten Ausführungsbeispiel näher erläutert.

In den Zeichnungen zeigen:
- Fig. 1: eine erfindungsgemäße Vorrichtung in einer isometrischen Darstellung; und
- Fig. 2: eine auf ein Schachtelement aufgesetzte erfindungsgemäße Vorrichtung in isometrischer Darstellung.

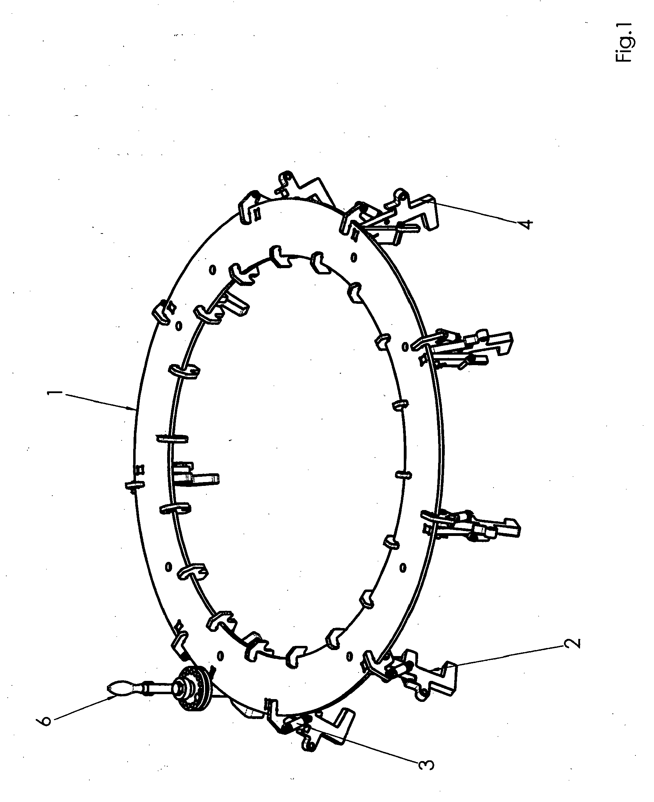

Fig. 1 zeigt in einer isometrischen schematischen Darstellung eine erfindungsgemäße Vorrichtung. An einem Schachtring bzw. Schachtkranz 1 sind schwenkbare Klammern 2 zum Halten des Schachtkranzes 1 auf einem Schachtelement vorhanden. Die Klammern 2 sind an dem Schachtkranz 1 schwenkbar befestigt. An dem Schachtkranz 1 sind Aufnahmen für eine Schwenkachse der Klammern 2 ausgebildet. Die Schwenkachse der Klammern 2 verläuft parallel zu einer Tangente bzw. dem Umfang des Schachtkranzes 1.

Die Klammern 2 sind über je eine Feder 3 in Öffnungsstellung vorgespannt. Die Feder 3 sind als Zugfedern ausgestaltet, die die Klammern 2 aus einer Stellung parallel zu einer Längsachse eines Schachtelements auslenken.

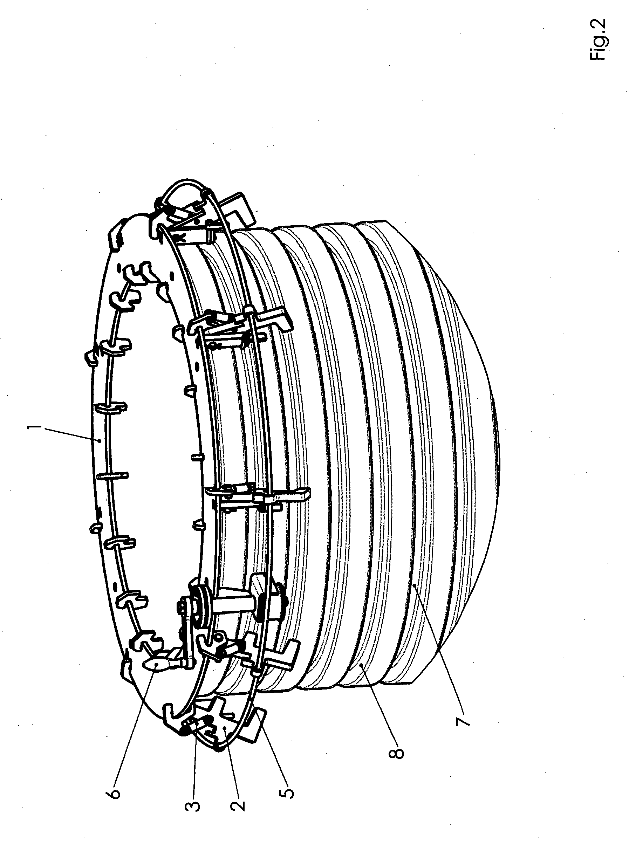

In den Klammern 2 ist je eine Bohrung 4 ausgebildet, die in einem Abschnitt der Klammer 2 ausgestaltet ist, der zumindest teilweise radial nach außen gerichtet ist. Durch die Bohrung 4 wird ein Spannseil 5 bzw. Spanngurt geführt (vgl. Fig. 2).

Die Enden des Spannseils 5 werden auf eine Kurbel 6 geführt, mit der das Spannseil 5 aufgewickelt bzw. gespannt werden kann. Durch das Aufwickeln bzw. Spannen des Spannseils 5 wird eine Kraft auf die Klammern 2 ausgeübt, die der Auslenkung durch die Federn 3 entgegenwirkt.

In Fig. 2 ist die erfindungsgemäße Vorrichtung in Auflage auf einem Schachtelement 7 gezeigt. Das Schachtelement 7 weist rippenartige Vorsprünge 8 auf. Die Klammern 2 können durch das Spannen mittels der Kurbel 6, die Teil einer Zugeinrichtung ist bzw. das Spannen durch die Kurbel 6 in Anlage an die Vorsprünge 8 gebracht werden. Zwischen den Klammern 2 und den Vorsprüngen 8 kann ein Formschluss hergestellt werden, mit dem der Schachtkranz 1 auf dem Schachtelement gehalten bzw. fixiert werden kann.

## Patentansprüche

1. Vorrichtung zum Halten eines Schachtkranzes (1) auf einem Schachtelement, wobei der Schachtkranz (1) eine Auflagefläche für das Schachtelement aufweist und zum Schachtkranz (1) hin schwenkbare Klammern (2) vorgesehen sind, die in einer Öffnungsstellung vorgespannt und mittels einer Zugeinrichtung in Schließstellung in Anlage zum Schachtelement gebracht werden können.

2. Vorrichtung nach Anspruch 1, wobei der Schachtkranz (1) mit einem sich vom Schachtelement erstreckenden Abschnitt in Verbindung steht, an dem eine Bohrlafette befestigt werden kann.

3. Vorrichtung nach Anspruch 1 oder 2, wobei die Klammern (2) an dem Schachtkranz (1) schwenkbar befestigt sind, und die Schwenkachsen der Klammern (2) parallel zur Umfangsrichtung des Schachtkranzes (1) verlaufen, wobei die Klammern (2) angepasst sind, in Vorsprünge (8) am Schachtelement einzugreifen.

4. Vorrichtung nach einem der Ansprüche 1 bis 3, wobei eine Klammer (2) in die Öffnungsstellung mittels einer Feder (3) vorspannbar ist.

5. Vorrichtung nach einem der Ansprüche 1 bis 4, wobei die Zugeinrichtung ein Spannseil (5) oder einen Spanngurt aufweist, das in den Klammern (2) längs des Umfangs des Schachtelements geführt ist.

6. Vorrichtung nach Anspruch 5, wobei das Spannseil (5) oder der Spanngurt in einer längs der Schwenkachse verlaufenden Bohrung (4) in einer Klammer (2) geführt ist.

7. Vorrichtung nach Anspruch 5 oder 6, wobei eine Kurbel (6) vorgesehen ist, mittels der das Spannseil (5) oder der Spanngurt spannbar ist.
